Europäisches Patentamt

European Patent Office

Office européen des brevets

(19)

(11) Veröffentlichungsnummer: **0 215 937**
**B1**

(12) EUROPÄISCHE PATENTSCHRIFT

(45) Veröffentlichungstag der Patentschrift:
28.12.88

(21) Anmeldenummer: 86902380.4

(22) Anmeldetag: 24.03.86

(86) Internationale Anmeldenummer:
PCT/EP 86/00175

(87) Internationale Veröffentlichungsnummer:
WO 86/05667 (09.10.86 Gazette 86/22)

(51) Int. Cl.⁴: **A 47 B 96/14**

(54) HOHLPROFILMATERIAL FÜR GESTELL- UND RAHMENBAU.

(30) Priorität: 25.03.85 DE 3510748

(43) Veröffentlichungstag der Anmeldung:
01.04.87 Patentblatt 87/14

(45) Bekanntmachung des Hinweises auf die Patenterteilung:
28.12.88 Patentblatt 88/52

(84) Benannte Vertragsstaaten:
AT BE CH DE FR GB IT LI LU NL SE

(56) Entgegenhaltungen:
AU-B- 25 597
DE-U- 7 427 039
FR-A- 2 437 810
US-A- 3 774 360

(73) Patentinhaber: Bergmann, Erwin, Voltmannstr. 163,
D-4800 Bielefeld (DE)

(72) Erfinder: Bergmann, Erwin, Voltmannstr. 163,
D-4800 Bielefeld (DE)

(74) Vertreter: Hassler, Werner, Dr.,
Postfach 17 04 Asenberg 62, D-5880 Lüdenscheid (DE)

## Beschreibung

Die Erfindung betrifft ein Hohlprofilmaterial für Gestell- und Rahmenbau, an dessen Innenwandung zwei zueinander parallele Auflageflächen für Köpfe von Befestigungsschrauben und zwei weitere, gleiche, dazu senkrechte Auflageflächen angeordnet sind und in dem ein Haltesteg mit einem Mittelstück eingeformt ist, das einen seitlich offenen, axial verlaufenden Kanal mit einem freien kreisförmigen Querschnitt hat, in den die Befestigungsschrauben senkrecht angeordneten gleichen Profilmaterials passend, vorzugsweise selbstschneidend, einschraubbar sind, an welchem Hohlprofilmaterial das Mittelstück Auflageflächen für Köpfe von Befestigungsschrauben aufweist, welche Auflageflächen zu je einer der Auflageflächen an der Innenwandung parallel sind, wobei alle Auflageflächen durch mindestens je zwei achsparallele, eine Ebene definierende Mantellinien des Profils bestimmt sind.

Ein derartiges Hohlprofilmaterial ist aus der AU-B-25 597 bekannt. Dieses Hohlprofilmaterial hat ein rechteckiges Profil mit ebenen Aussenflächen, so dass anstossendes Hohlprofilmaterial mit einer ebenen Stossfläche angefügt werden kann. Eine Verdrehungssicherheit ist nur durch zusätzliche Elemente wie Eckversteifungen erzielbar.

Ein ähnliches Hohlprofilmaterial ist aus der DE-U-7 427 039 bekannt. Dieses hat ebenfalls ein rechteckiges Profil, so dass sowohl auf Gehrung wie stumpf zusammengesetzte Profilleisten in ihren Verbindungsflächen nur kraft- jedoch nicht formschlüssig miteinander verbunden sind, so dass diese Verbindungen nur relativ geringen Widerstand gegen Drehmomentenlast bieten, weshalb ein zusätzlicher Eckverbinder in die Profilleisten zur Versteifung und Drehsicherung eingesetzt werden muss.

Die FR-A-2 437 810 beschreibt Hohlprofilmaterial, bei dem zwei einander gegenüberliegende Seitenflächen konvexe Aussenkontur haben. Jedoch sind diese Seitenflächen nicht zum Ansetzen von Verbindungsleisten vorgesehen und geeignet.

Es ist Aufgabe der Erfindung, ein Hohlprofilmaterial zu offenbaren, das ohne zusätzliche Versteifungselemente oder Eckverbinder ermöglicht, stabile, drehmomentfeste Rahmen oder Gestelle durch Verschraubung ihrer Hohlprofilleisten in mehrdimensionalen Eck- und Knotenverbindungen im Stumpfverbund in einfacher Weise herzustellen.

Diese Aufgabe wird nach der Erfindung dadurch gelöst, dass die Aussenwandung im Bereich der an der Innenwandung angeordneten Auflageflächen konvex mit achsparallelen Mantellinien gewölbt ist derart, dass gleiches Hohlprofilmaterial endseitig entsprechend konkav angefräst im Stoss drehsicher anschraubbar ist.

Gemäss Erfindung sollen die Stossflächen entsprechend der Aussenkontur des Hohlprofilmaterials profiliert sein, so dass durch diese paarig ineinandergreifende Profilierung eine Verdrehsicherheit gegeben ist. Die Hohlprofilleisten können in Eckabschnitten allein durch Schrauben miteinander verbunden sein. Die durch die Schrauben ausgeübten Zugkräfte sichern die Verspannung an den konkaven bzw. konvexen ineinandergreifenden Flächen.

Weiterbildungen der Erfindung sind in den Unteransprüchen angegeben.

In den Fig. 1 bis 11 sind Beispiele vorteilhafter Profilgestaltungen und zugehöriger Verbindungskonstruktionen dargestellt:

Fig. 1 zeigt einen dreidimensionalen Knotenabschnitt von rundem Hohlprofilmaterial aus einem Gestell herausgeschnitten,

Fig. 2 zeigt den T-förmigen Anschluss eines Rundprofils von geringerem Querschnitt,

Fig. 3 zeigt einen Knotenabschnitt eines Rahmenprofils mit senkrechter Hohlprofilleiste,

Fig. 4 zeigt ein an zwei über Eck zusammenhängenden Seitenwänden offenes Hohlprofilmaterial im Schnitt,

Fig. 5 zeigt eine Alternative zu Fig. 4,

Fig. 6 zeigt an gegenüberliegenden Seitenwänden offenes Hohlprofilmaterial als Mittelstück einer T-Verbindung eines Doppelrahmens,

Fig. 7 zeigt ein Doppelprofilmaterial im Schnitt,

Fig. 8 zeigt ausschnittweise den Einsatz einer Platte in einem Rahmen im Querschnitt,

Fig. 9 zeigt ausschnittweise den Einsatz eines Gitters in einem Rahmen im Querschnitt,

Fig. 10 zeigt im Querschnitt den Einsatz einer Doppelplatte in einem Rahmen verkürzt und

Fig. 11 zeigt einen Knotenabschnitt eines regelmässigen Oktogonprofils.

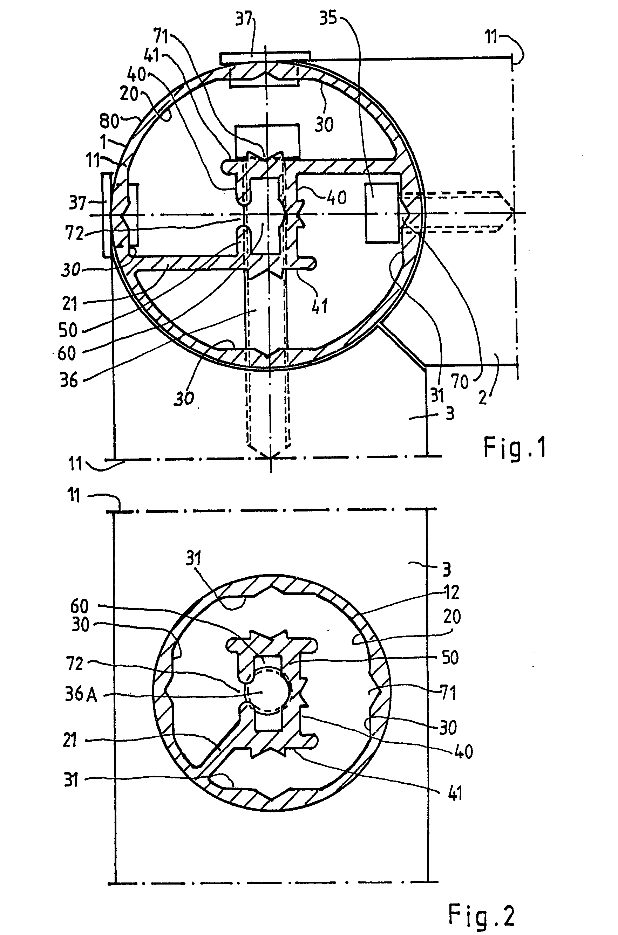

Fig. 1 zeigt einen Knotenabschnitt eines Gestells aus runden Hohlprofilleisten 1, 2, 3 von denen die Hohlprofilleiste 1 im Querschnitt des Hohlprofilmaterials 11 oberhalb des Knotenabschnitts und die Hohlprofilleisten 2 und 3 in Seitenansicht abgeschnitten zu sehen sind. Letztgenannte Hohlprofilleisten 2, 3 sind gegeneinander auf Gehrung profiliert und zur Hohlprofilleiste 1 kreisförmig auf deren Aussenkontur 80 zugerichtet. Von der Innenwandung 20 ausgehende Stege 21 tragen ein Mittelstück 50. Im Mittelstück 50 ist ein Kanal 60 ausgebildet, der zwecks einfacher Pressbarkeit über eine Nut 72 zu dem übrigen Innenraumbereich des Hohlprofilleiste 1 offen ist. Der Kanal 60 hat einen kreisförmigen freien Querschnitt, der passend für ein vorzugsweise selbstschneidendes Gewinde einer Befestigungsschraube dimensioniert ist. Die Nut 72 dient zur Aufnahme der Schnittspäne.

Die Innenwandung 20 und das Mittelstück 50 tragen jeweils parallel bzw. senkrecht zueinander, als sichere Anlage für Befestigungsschrauben 35, 36, Auflageflächen 30, 31; 40, 41. In diesen verlaufen zentrisch Senknuten 70, 71, die das zentrische Einbringen der Bohrungen für die Schraubenein- und durchführungen erleichtern. Nach Einführung der Schrauben 35, 36 werden die Einführungsbohrungen durch Stopfen 37 verschlossen.

Fig. 2 zeigt den T-förmigen Anschluss eines runden Hohlprofilmaterials 12, dessen Querschnitt oberhalb des Anschlusses an einen Abschnitt einer Hohlprofilleiste 2 dargestellt ist. An einem Steg 21 sitzt ein Mittelstück 50 mit einem Kanal 60, der vorzugsweise den gleichen kreisförmigen freien Querschnitt wie in Fig. 1 hat. Im Kanal 60 ist die Spitze der Schraube 36A zu erkennen. Die übrigen Bezugszeichen entsprechen funktionsgleichen Teilen bzw. Flächen, wie in Fig. 1.

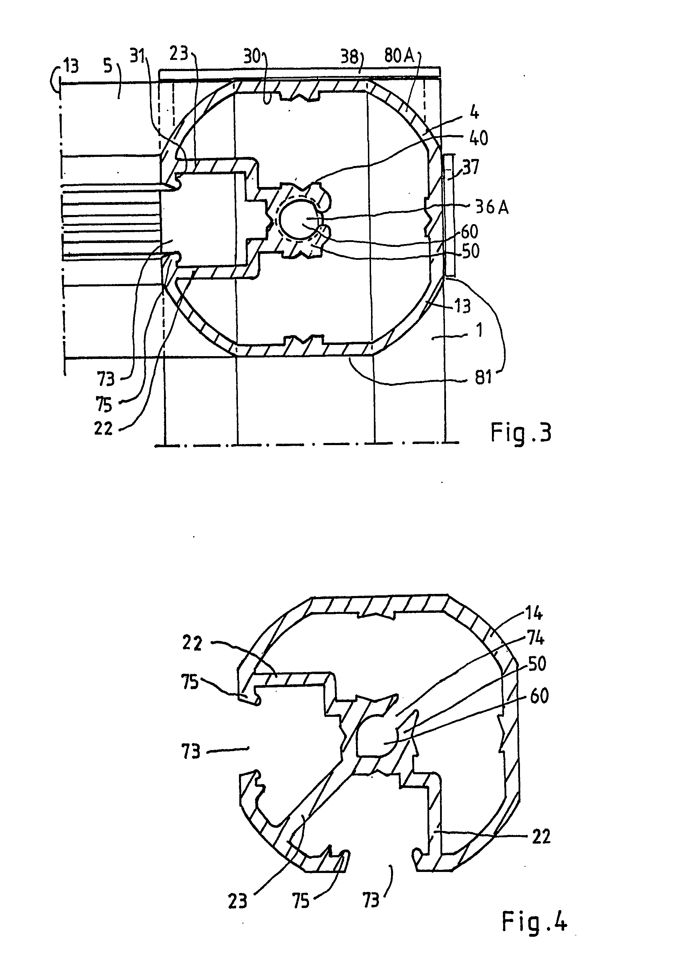

Fig. 3 zeigt auf Gehrung geschnittene Rahmenleisten 4, 5, die in einem Knotenabschnitt mit einer senkrecht dazu verlaufenden Hohlprofilleiste 1 verbunden sind. Die äussere Kontur der Rahmenleiste 4 bzw. des Querschnittes des Hohlprofilmaterials 13 besteht aus Kreisabschnitten 80A und geraden Abschnitten 81, die parallel zu den Auflageflächen 30, 31 verlaufen. Durch eine dieser Auflageflächen 31 erstreckt sich eine offene Nut 73 für die Halterung von Platten, Gittern, oder dergleichen. Die Stege 22, 23, die das Mittelstück 50 tragen, sind nahe der Ränder 75 der Nut 73 angeordnet, so dass die Nut 73 durch sie versteift ist. Das Ende der Hohlprofilleiste 1 ist mit einem Verschlussstopfen 38 verschlossen.

Fig. 4 zeigt einen Querschnitt eines an zwei senkrecht zueinander ausgerichteten Seitenflächen offenen, jeweils durch eine offene Nut 73 als Wandeckenprofil ausgearbeiteten Hohlprofilmaterials 14. In der Nähe eines jeden Nutenrandes ist ein Steg 22, 23 angeordnet; der Steg 23 liegt symmetrisch, radial zwischen den beiden Nuten 73. Der Kanal 60 ist durch eine diagonal eingebrachte Nut 74 mit dem übrigen Innenraum verbunden.

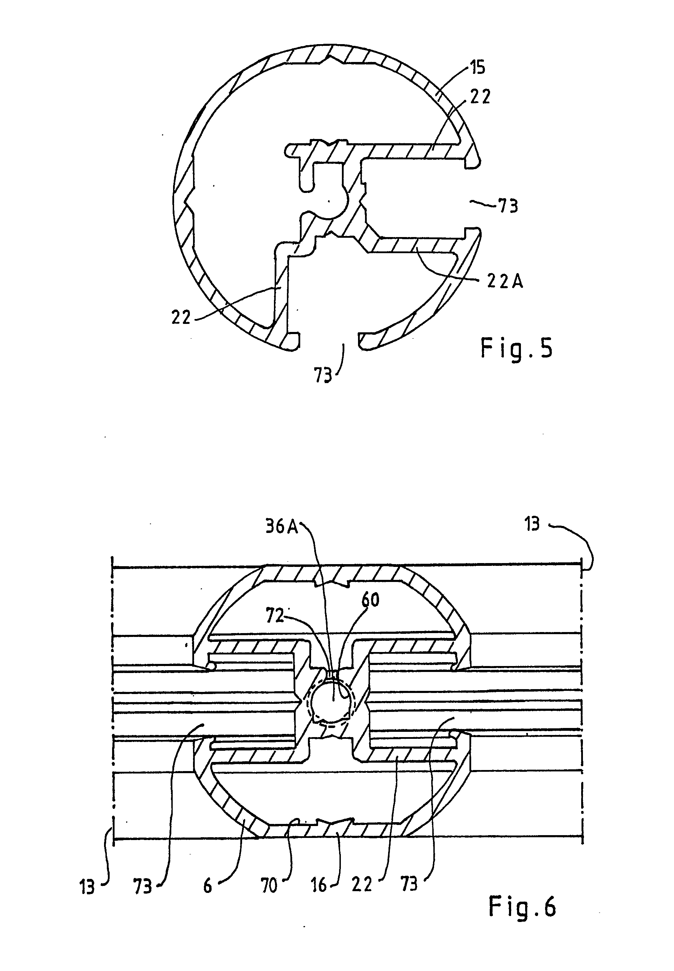

In Fig. 5 ist ein ähnlicher Querschnitt eines Hohlprofilmaterials 15 wie in Fig. 4 dargestellt, jedoch ist der Steg 22A, der zwischen den beiden Nuten 73 liegt, parallel zu einem der anderen Stege 22 angeordnet, so dass ein etwa rechteckiger Freiraum hinter einer der Nuten 73 entsteht, der diese Nut besonders versteift.

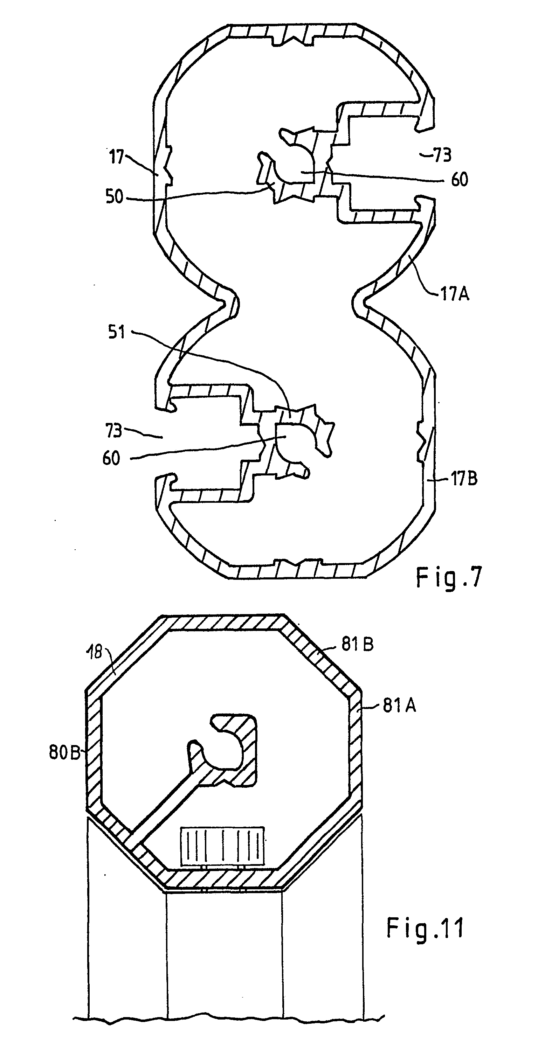

In Fig. 6 ist ein Abschnitt einer T-förmigen Verbindung eines Hohlprofilmaterials 13 nach Fig. 3, das in Aufsicht durchgehend dargestellt ist, mit einem in axialer Projektion gezeigten, an gegenüberliegenden Seiten mit offenen Nuten 83 versehenen Hohlprofilmaterial 16 gezeigt. Es können somit beidseitig Platten eingesetzt werden. Die Stege 22 sind an allen vier Nutenrändern jeweils parallel verlaufend vorgesehen, so dass eine hohe Stabilität erreicht wird. Die innenliegende Nut 72, die die Verbindung zum Kanal 60 herstellt, ist zu einem der Innenräume offen. Wie in Fig. 2 erkennt man im Kanal 60 die Spitze der Befestigungsschraube 36A und darin das eingeschnittene Gewinde.

In Fig. 7 ist ein Querschnitt eines Hohlprofilmaterials 17 gezeigt, der aus zwei, in etwa dem Profilmaterial 13 nach Fig. 3 entsprechenden, achsparallel liegenden, ohne Zwischenwandung aneinander anschliessenden, Teilquerschnitten besteht. Die Teilquerschnitte 17A, 17B haben jeweils eigene Mittelstücke 50, 51 mit Kanälen 60. Die nach aussen offenen Nuten 73 sind in entgegengesetzte Richtungen orientiert, den Teilquerschnitten entsprechend gegeneinander versetzt angeordnet.

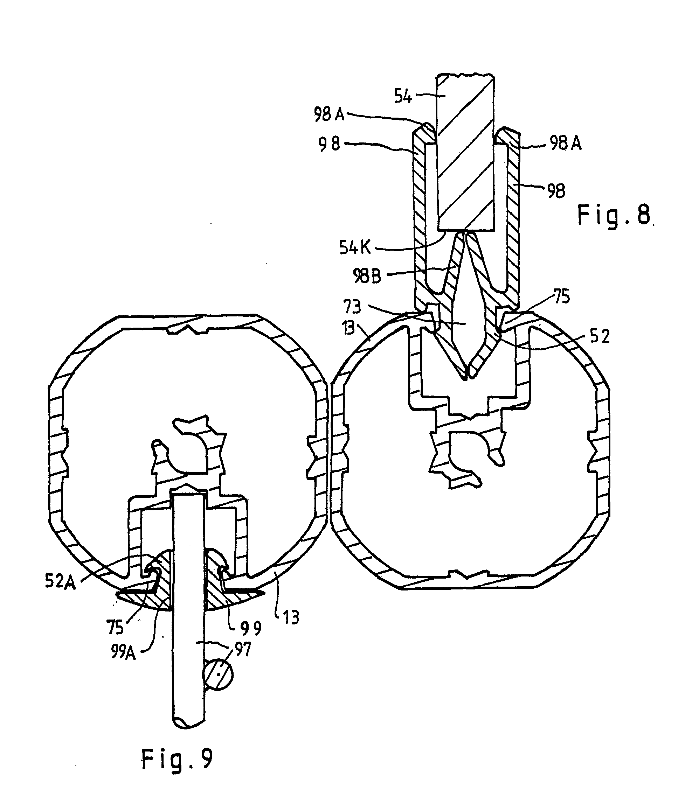

Fig. 8 zeigt im Querschnitt, wie mit Haltern 98 eine Platte 54, z.B. eine Glasplatte in der Nut 73 eines Hohlprofilmaterials 13 befestigt wird. Die Halter 98 sind symmetrisch zur Platte 54 eingesetzt und greifen jeweils mit einer Feder 52 hinter den entsprechenden Rand 75 und stützen sich an letzterem jeweils ab. Mit gegeneinander orientierten Lippen 98A fassen sie die Platte 54 elastisch, und mit elastischen Stützen 98B geben sie dem Plattenrand 54K sicheren Halt, so dass eine Versteifung des Rahmens ohne Überlastungsgefahr für die Platte gegeben ist.

Fig. 9 zeigt im Querschnitt einen Halter 99, der mit Federn 52A hinter die Nutränder 75 eines Hohlprofils 13 nach Fig. 3 greift und mit Bohrungen 99A in Nutrichtung versehen ist, in die ein Gitterstab 97 eingesetzt ist.

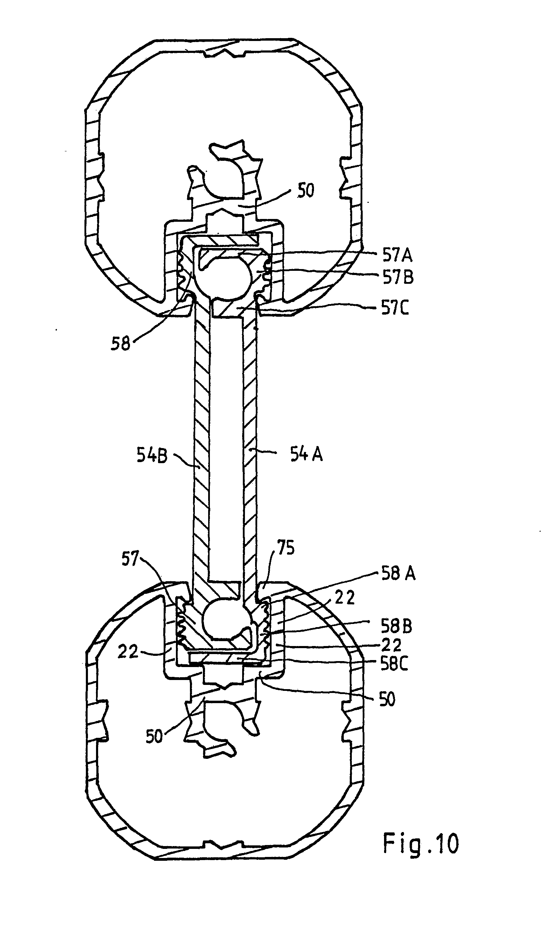

Fig. 10 zeigt ein Paar paralleler Platten 54A, 54B, die sich mit ihren Randbereichen 57, 58 jeweils durch eine Nut in einen Freiraum hinter derselben erstrecken und sich jeweils an einem Mittelstück 50, Stegen 22 und Rändern 75 abstützen. Die Randbereiche 57, 58 sind jeweils etwa U-förmig ausgebildet und greifen ineinander, wobei sie sich mit den U-Schenkeln gegenseitig abstützen und gegen die umgebenden Wandungen halten. Mit den, verglichen zu einer Massivplatte, relativ leichten Plattenpaaren wird eine hohe Stabilität erreicht.

Die dargestellten Hohlprofilquerschnitte und Verbindungen sind beispielhaft. Sie können durch Kombinationen der Beispiele und abgewandelte Konturen im Rahmen der Erfindung ergänzt werden. Selbstverständlich ist es auch möglich, in den Nuten und inneren Freiräumen verschiebliche Versteifungs- und Anschlussbauteile zu lagern oder zu halten.

Fig. 11 zeigt einen Eckabschnitt aus einem oktogonalen Hohlprofilmaterial 18 mit einer Oktogonkontur 80B, deren Abschnitte 81A, 81B jeweils gleich lang sind, so dass sie ein regelmässiges Achteck bilden.

**Patentansprüche**

1. Hohlprofilmaterial (11 ... 18) für Gestell- und Rahmenbau, an dessen Innenwandung (20) zwei zueinander parallele Auflageflächen (30) für Köpfe von Befestigungsschrauben (35) und zwei weitere, gleiche, dazu senkrechte Auflageflächen (31) angeordnet sind und in dem ein Haltesteg (21) mit einem Mittelstück (50) eingeformt ist, das einen seitlich offenen, axial verlaufenden Kanal (60) mit einem freien kreisförmigen Querschnitt hat, in den die Befestigungsschrauben (36) senkrecht angeordneten gleichen Profilmaterials passend, vorzugsweise selbstschneidend, einschraubbar sind, an welchem Hohlprofilmaterial das Mittelstück (50) Auflageflächen (40, 41) für Köpfe von Befestigungsschrauben (36) aufweist, welche Auflageflächen (40, 41) zu je einer der Auflageflächen (30, 31) an der Innenwandung (20) parallel sind, wobei alle Auflageflächen durch mindestens je zwei achsparallele, eine Ebene definierende Mantellinien des Profils bestimmt sind, dadurch gekennzeichnet, dass die Aussenwandung im Bereich der an der Innenwandung angeordneten Auflageflächen (30, 31) konvex mit achsparallelen Mantellinien gewölbt ist derart, dass gleiches Hohlprofilmaterial endseitig entsprechend konkav angefräst im Stoss drehsicher anschraubbar ist.

2. Hohlprofilmaterial nach Anspruch 1, dadurch gekennzeichnet, dass es eine Aussenkontur (80, 80A, 80B, 80C) folgender Form hat, einen Kreis (80), ein regelmässiges Achteck (80B), ein Achteck (80C), dessen eine Achse (AA) länger als dessen andere, zur ersten senkrecht stehenden Achse (AB) ist, oder ein Achteck (80A), dessen Ecken verbindende Bereiche (81) alternierend Abschnitte eines Kreises und Geraden sind, die parallel zu den Auflageflächen (30, 31) liegen.

3. Hohlprofilmaterial nach Anspruch 1, dadurch gekennzeichnet, dass entlang der Auflageflächen (30, 31) mittig Nuten (70, 71) verlaufen.

4. Hohlprofilmaterial nach Anspruch 3, dadurch gekennzeichnet, dass die erste Auflagefläche (31) in der die offene Nut (73) verläuft, mit den benachbarten Stegen (22, 23) und dem Mittelstück (50) einen annähernd rechteckigen Querschnitt umschliesst.

5. Hohlprofilmaterial nach Anspruch 1, dadurch gekennzeichnet, dass parallel zu den Auflageflächen (30, 31) an dem Mittelstück (50) weitere Auflageflächen (40, 41) für Befestigungsschrauben (36) angeordnet sind, auf denen mittig Nuten (71, 72) verlaufen, die einen stumpfwinkligen dreieckigen Querschnitt haben oder zum Kanal (60) durchgehend offen sind.

6. Hohlprofilmaterial nach Anspruch 1, dadurch gekennzeichnet, dass es einstückig aus zwei achsparallelen Profilen (17A, 17B) besteht, die ohne innenliegende Wandung aneinander anschliessen.

7. Gestell oder Rahmen, hergestellt aus Hohlprofilmaterial nach einem der Ansprüche 1 bis 6, dadurch gekennzeichnet, dass das Hohlprofilmaterial (11 bis 18) zu Hohlprofilleisten (1 bis 3) zugerichtet und zumindest eine der endseitig konkav angefrästen Hohlprofilleisten (3) passend und senkrecht zur eigenen Achse an das Gegenprofil (1) angesetzt ist.

8. Gestell oder Rahmen nach Anspruch 7, dadurch gekennzeichnet, dass mindestens zwei der Hohlprofilleisten (2, 3), deren Achsen senkrecht zueinander stehen, endseitig sowohl passend zu der Hohlprofilleiste (1) als auch auf Gehrung mit der jeweils anderen Rahmenleiste (2, 3) zugerichtet sind.


**Revendications**

1. Profilé creux (11 ... 18) pour la construction de châssis et de cadres, dont la paroi interne (20) est pourvue de deux surfaces d'appui (30) parallèles entre elles pour les têtes des vis de fixation (35) et de deux autres surfaces d'appui semblables (31) qui leur sont perpendiculaires et dans lequel est moulée une nervure de soutien (21) munie d'une pièce centrale (50), qui présente un canal (60) de section circulaire, orienté axialement et ouvert latéralement, canal dans lequel peuvent se visser les vis de fixation (36), de préférence autotaraudantes, s'adaptant à un même profilé placé perpendiculairement, profilé creux dont la pièce centrale (50) présente des surfaces d'appui (40, 41) pour les têtes des vis de fixation (36), les dites surfaces d'appui (40, 41) étant chacune parallèle à l'une des surfaces d'appui (30, 31) de la paroi interne (20), au moins une sur deux de toutes les surfaces d'appui du profilé étant définie par des génératrices parallèles à l'axe engendrant une surface, caractérisé en ce que, dans la partie des surfaces d'appui (30, 31) ménagées sur la surface interne, la paroi externe a une forme convexe dont les génératrices sont parallèles à l'axe, de telle sorte qu'un même profilé creux, dont l'extrémité aura été fraisée pour lui donner une forme concave correspondante, puisse y être fixé par vissage et former avec lui une jointure résistant à la torsion.

2. Profilé creux selon la revendication 1, caractérisé en ce qu'il présente un contour extérieur (80, 80A, 80B, 80C) ayant l'une des formes suivantes: un cercle (80), un octogone régulier (80B), un octogone (80C) dont un axe (AA) est plus long que l'autre (AB) perpendiculaire au premier, ou un octogone (80A) dont les parties (81) situées entre les angles sont alternativement en arcs de cercle et rectilignes et qui sont parallèles aux surfaces d'appui (30, 31).

3. Profilé creux selon la revendication 1, caractérisé en ce qu'il présente le long des surfaces d'appui (30, 31) des rainures centrales (70, 71).

4. Profilé creux selon la revendication 3, caractérisé en ce que la première surface d'appui (31) dans laquelle se trouve la rainure ouverte (73) forme avec les nervures voisines (22, 23) et la pièce centrale (50) une espace de section approximativement rectangulaire.

5. Profilé creux selon la revendication 1, caractérisé en ce que d'autres surfaces d'appui (40, 41) pour vis de fixation (36) sont disposées sur la pièce centrale (50) parallèlement aux surfaces d'appui (30, 31), surfaces sur lesquelles se trouvent des nervures centrales (71, 72) ayant une section triangulaire obtuse ou étant ouvertes de façon continue sur le canal (60).

6. Profil creux selon la revendication 1, caractérisé en ce qu'il consiste en une pièce constituée de deux profils aux axes parallèles (17A, 17B) qui se raccordent entre eux sans paroi interne.

7. Châssis ou cadre, construit à partir de profilés creux selon l'une des revendications 1 à 6, caractérisé en ce que le profilé creux (11 à 18) est assemblé à des baguettes à profil creux (1 à 3) et qu'au moins l'une des baguettes à profil creux (3) dont l'extrémité a été fraisée perpendiculairement à son propre axe pour lui donner une forme concave est placée en s'y adaptant sur le profil inverse (1).

8. Châssis ou cadre selon la revendication 7, caractérisé en ce qu'au moins deux baguettes à profil creux (2, 3), dont les axes sont perpendiculaires entre eux, sont assemblées de telle sorte que d'une part elles s'adaptent par leurs extrémités à la baguette à profil creux (1) et que d'autre part les baguettes du cadre (2, 3) s'adaptent entre elles par un joint à onglet.


**Claims**

1. Hollow profile material (11 to 18) for the construction of support mounts and frames, on the internal wall (20) of which are disposed two parallel bearing surfaces (30) for the heads of fixing screws (35) and two further identical bearing surfaces (31) perpendicular to these, and in which a fixed support (21) is formed, said support having a central piece which has an axially extending channel (60) open at the side and having an open circular cross-section, into which the fixing screws (36) of the said vertically disposed profile material can be screwed in an appropriate manner, preferably self-tapping, the central piece (50) in said hollow profile material comprising bearing surfaces (40, 41) for the heads of fixing screws (36), said bearing surfaces (40, 41) each being parallel to one of the bearing surfaces (30, 31) on the internal wall, wherein all bearing surfaces are defined by at least two axially parallel generating lines of the profile, said lines defining a plane, characterised in that the external wall near the bearing surfaces (30, 31) disposed on the internal wall is convex, having axially parallel generating lines, such that said hollow profile material, its end milled in a corresponding concave manner, can be firmly screwed on at the joint.

2. Hollow profile material according to claim 1, characterised in that it has an external contour (80, 80A, 80B, 80C) of the following form: a circle (80), a regular octagon (80C), having one axis (AA) longer than the other axis (AB) which is perpendicular to the first axis, or an octagon (80A) in which the regions (81) connecting its corners are alternatively segments of a circle and of straight lines, which are parallel to bearing surfaces (30, 31).

3. Hollow profile material according to claim 1, characterised in that grooves (70, 71) extend along the centre of the bearing surfaces (30, 31).

4. Hollow profile material according to claim 3, characterised in that the first bearing surface (31) along which the open groove (73) extends, together with the adjacent supports (22, 23) and the central piece (50), encloses an approximately rectangular cross-section.

5. Hollow profile material according to claim 1, characterised in that further bearing surfaces (40, 41) for fixing screws (36) are disposed on the central piece (50) parallel to bearing surfaces (30, 31), grooves (71, 72) extending along the centre of said bearing surfaces (40, 41) said grooves having an obtuse-angled triangular cross-section, or being continuously open towards the channel (60).

6. Hollow profile material according to claim 1, characterised in that it consists of two axially parallel profiles (17A, 17B) in one piece, attached to each other without an internal wall.

7. Support mount or frame produced from hollow profile material according to any of claims 1 to 6, characterised in that the hollow profile material (11 to 18) is adapted to hollow profile cover strips (1 to 3) and at least one of the hollow profile cover strips (3) having its end milled in a concave manner, is appropriately attached, perpendicular to its own axis, to the counter-profile (1).

8. Support mount or frame according to claim 7, characterised in that the ends of at least two of the hollow profile cover strips (2, 3), having mutually perpendicular axes, are both adapted in an appropriate manner to the hollow profile cover strip (1) and mitred to the other cover strips (2, 3).

Fig.1

Fig.2

Fig.3

Fig.4

Fig.5

Fig.6

17

50

73

60

17A

51

73

60

17B

Fig.7

18

81 B

80B

81 A

Fig.11

Fig. 8.

Fig. 9

50

57A
57B
57C

58

54B    54A

57    75

58 A
22

22    58B
22
58C

50

50

Fig.10